Europäisches Patentamt

European Patent Office

Office européen des brevets

(11) Publication number: **0 179 295**
**A1**

## (12) EUROPEAN PATENT APPLICATION

(21) Application number: **85112124.4**

(22) Date of filing: **25.09.85**

(51) Int. Cl.⁴: **A 23 L 1/308**
**A 23 L 1/28, A 23 L 1/29**
**A 23 L 1/212**

(30) Priority: **25.09.84 IL 73056**
**26.08.85 US 769549**

(43) Date of publication of application:
**30.04.86 Bulletin 86/18**

(84) Designated Contracting States:
**CH DE FR GB LI NL**

(71) Applicant: **Danon, David**
**16, Hankin Street**
**Rehovot(IL)**

(72) Inventor: **Danon, David**
**16, Hankin Street**
**Rehovot(IL)**

(74) Representative: **Schmidt-Evers, Jürgen, Dipl.-Ing. et al,**
**Patentanwälte Dipl.-Ing. H. Mitscherlich Dipl.-Ing. K.**
**Gunschmann Dipl.-Ing. Dr.rer.nat. W. Körber Dipl.-Ing. J.**
**Schmidt-Evers Dipl.-Ing. W. Melzer Steinsdorfstrasse 10**
**D-8000 München 22(DE)**

(54) **Medicament and dietary supplement containing insoluble and indigestible fiber, method of making it, and method of use.**

(57) There is disclosed a dietary supplement for use as a source of indigestible, insoluble fiber comprising a solid oral dosage form comprising a fiber-containing raw material selected from the group consisting of mushroom flesh and orange pulp and combinations thereof, said raw material having been comminuted to a homogeneous slurry extracted with a physiologically acceptable dehydrating agent, filtered or centrifuged to remove substantially all of said agent and the water contained therein, lyophilized and dry-ground to particulate or powder form, said supplement comprising an amount of said insoluble indigestible fiber sufficient to satisfy the dietary fiber requirements of a human and a method for making such dietary supplement. A method for treating chronic constipation comprises administering to a patient in need of such treatment an amount effective to treat constipation of an oral solid dosage form comprising insoluble indigestible fiber from a source selected from the group of mushrooms, orange peels and combinations thereof, said fiber having been comminuted to homogeneity, dehydrated to remove substantially all of the water contained therein by extracting with a physiologically acceptable, dehydrating agent sand filtering under reduced pressure, and lyophilized.

EP 0 179 295 A1

September 25, 1985

## MEDICAMENT AND DIETARY SUPPLEMENT CONTAINING INSOLUBLE AND INDIGESTIBLE FIBER, METHOD OF MAKING IT, AND METHOD OF USE

The present invention relates to novel dietary supplements/medicaments comprising dietary insoluble and indigestible fiber, a method for making them, and methods for using them, especially in the treatment of constipation.

Most chronic constipation cases arise from a habitual neglect of afferent impulses, failure to initiate defecation, dependency on laxatives and failure to adhere to a diet providing adequate amounts of insoluble indigestible fiber or bulk. An increase in dietary bulk with foods rich in fiber, such as green vegetables or unprocessed cereal grains, and the regular use of bulk laxatives, such as hemicellulose, psyllium extract, and powdered or unprocessed bran, are often prescribed for patients suffering from chronic constipation.

In addition, the presence of an adequate amount of fiber in the diet has been found to induce peristalsis in the bowel, which regulates the passage of food through the intestine and prevents stagnation.

Unfortunately, however, most patients and especially the elderly are resistant to these measures for various reasons, including inability or unwillingness to cook unprocessed foods, and --more important-- a distaste for fiber-rich foods, both because of their taste and texture.

Therefore, there is a need to develop a dietary fiber supplement and medicament which can be used preventively and therapeutically against constipation and which can be ingested either directly in tablet or granular form or combined with food in the manner of a food additive. Such a supplement should have a pleasant taste and texture to overcome the disincentive of patients to consume fiber-containing products.

It has now been discovered that preparations comprising comminuted, homogenized, dehydrated and lyophilized or dried mushroom and/or orange fiber can be used as dietary fiber supplements and medicaments to prevent or to treat constipation and to ensure an adequate supply of fiber. Contrary to bran and other fiber preparations, the preparations of the present invention have an extremely pleasant taste and an extremely smooth, pleasant and unobtrusive texture and can be combined with foods during or after cooking in a manner akin to that in which flavoring agents are used.

Two tablespoonfuls (or the equivalent) of thus prepared mushroom and/or orange fiber provide sufficient fiber to satisfy the daily need in fiber of an individual (usually placed at 20-25 grams although more fiber is not harmful). Two tablespoons of mushroom fiber may have too much flavor to be added to the same dish as a flavoring agent. On the other hand, orange peel alone may be considered too bland. It may thus be preferable to either mix the mushroom fiber with orange fiber (in about equal amounts or according to taste) which has a less powerful, though also pleasant, flavor, or to consume at least a portion of the daily fiber requirement by taking one or more tablets comprising the same fiber.

Mixing of orange and mushroom powder also improves the appearance of the final product, as the orange fiber gives the product a lighter color. Alternatively, (or in addition), a light color may be obtained by bleaching the mushroom fibers during comminution with a household bleach, such as sodium or potassium hypochlorite, or by preventing

0179295

the brown color from forming with sodium bisulfite introduced during comminution. In that event, however, water should be used as the liquid in comminution. Any chloride remaining in the fiber mixture after the completion of extraction will be removed during lyophilization or by evaporation, e.g. by flash evaporation or by heating at a moderate temperature (about 50°-60°C) or by letting the product stand in open air for a few hours. If sodium bisulfite is used it will be removed by washing and centrifugation.

The lyophilized fiber product is preferably ground to granules or powder which may be packaged in individual dosage forms (or in bulk) or compressed into tablets.

The raw material for the product of the present invention includes surplus mushrooms, or mushroom fragments, such as stems, and orange pulp. It is widely available as a waste product of the orange juice and mushroom processing industry and can be obtained at a very low cost. Similarly, the process for making the present supplement or medicament is inexpensive, as most of the extraction liquid can be recovered and recycled. Accordingly, the present invention can be practiced very economically.

According to the present invention, small mushrooms or broken mushroom parts or stems or surplus of regular mushrooms, are first washed, if necessary, to remove any adhering foreign matter. Washing water is removed by centrifugation or any other suitable process step. The thus obtained clean material is introduced into a blender or similar device, together with a physiologically acceptable liquid which is suitable for comminution, such as water. Preferably, however, comminution takes place at the same time as the beginning of dehydration and the dehydrating agent is also used as the comminution liquid. The fiber-containing material is thus comminuted to a fine slurry. Dehydrating liquids of choice are isopropyl alcohol, small residues of which are acceptable in edibles, and ethanol. Isopropyl alcohol of high purity is preferred. The dehydration agent can be recovered and recycled. Other suitable dehydrating liquids which have an adequately high flash-point and which are physiologically acceptable, can also be used.

The blender is filled with an adequate amount (at least sufficient to cover the mushrooms or pulp) of isopropanol or ethanol, and after blending to a uniform slurry, it is left to stand for a certain period of time, of the order of 10 to 60 minutes. At the end of this period, the slurry is filtered off either by simple filtration or preferably under the highest vacuum available, and the alcohol is recycled for further use. Alternatively, the fiber can be separated from the slurry by centrifugation, in which case the sediment should be dried either by evaporation or slow heat (about 50°-60°C), or lyophilization, or combinations thereof.

Suitable filter media include (Whatman No. 1 filter paper, sintered glass, household coffee filter, or the like). If filtration takes place under substantially reduced pressure, nearly dry filter cake is obtained. This is broken up into small particles, and transferred to an evaporator, drier or lyophilizer, where after drying (that usually lasts from one to several hours) aggregates of a dry product are obtained. These are ground to a fine powder, or to granules. Grinding may be done in a mill with rotating blades or in any other milling device, resulting in a fine powder, which retains only traces of the alcohol, if any at all. The thus obtained powder can be marketed as such, preferably in hermetically sealed containers or pouches, and used as seasoning for edibles, and especially for the preparation of sauces, for use in salads, soups, omelets, cereals, etc. The thus obtained powder can be compacted into tablets, which can be marketed as a dietary supplement or anti-constipation aid. Tablets can be taken as such or added to foodstuffs. When contacted with water, the tablets, granules or powder swell to a gel-like product, which can be added to foodstuffs and which provides both flavoring as well as fibers.

The finished product, not only has pleasant flavor, but also a smooth pleasant texture unlike that of other

0179295

fiber-containing products. Hence, the product of the present invention neither tastes nor feels like a fiber supplement.

Mushrooms can also be comminuted in a food-processor or equivalent industrial size equipment, and the thus obtained comminuted product can be treated as described above by contacting it with a suitable dehydrating liquid (such as alcohol) and further processing as described above. With this comminuted material, the period required for contact with the alcohol prior to drying or lyophylization is longer (of the order of a few hours).

Orange pulp can be processed in the same way as outlined for mushroom pulp above. Orange fiber need not be dried as thoroughly as the mushroom powder if the orange fiber is to be packaged alone, because orange fiber is not as prone to enzymatic action under moist conditions, as mushroom fiber.

If desired, mushrooms can be comminuted in water to which a small amount (0.5 - 0.75 g/liter solution) of sodium or potassium hypochlorite has been added, as a bleaching agent, to bleach the brown color that mushroom material exposed to air acquires as a result of enzymatic action. Alternatively, the brown color can be prevented by spraying the mushroom material with e.g. a 0.5 g/liter aqueous solution of sodium bisulfite, or by comminuting them in such a solution. Such a treatment is not necessary for the orange pulp.

As stated before, if mushrooms are comminuted in an aqueous medium, they should be separated from the medium by centrifugation (which is preferably continuous) before they are mixed with the dehydrating agent.

If hypochlorite is used, any traces of chloride remaining after the processing is over (i.e. after lyophilization) can be removed by evaporation, gentle heating or simply letting stand, as necessary.

Orange pulp is generally available as a waste product of the orange juice industry. Before discarding the pulp, the orange processors usually remove the essential oils contained in it. However, removal of the essential oils is not necessary prior to processing the pulp in accordance with the present invention. In fact, the extraction step with the alcohol can be used to remove the essential oils, which may be recovered from the alcohol before it is recycled.

Suitable packages can be prepared from hermetically sealed plastic, cellophane, metal foil, or laminates or other containers which can be sealed hermetically. The dehydrated product can be stored without deterioration for prolonged periods of time. It can be reconstituted with water and is of versatile use as flavoring agent and as a source of fiber.

The packaging can be in dosage units containing from about 5g to about 50g of product, or it can be in bulk.

EXAMPLE 1

A quantity of 100 g broken champignons was introduced into a food processor, about 200 ml of isopropanol were added and the mushrooms were slurried during three minutes to a uniform slurry, which was left to stand for one hour. The slurry was filtered-off on Whatman No. 1 filter paper, and the isopropanol was recovered. The filter cake was transferred to a container and an equal volume of absolute isopropanol was added and left to stand for one hour. The slurry was filtered on a sintered glass under reduced pressure, resulting in a nearly dry filter cake. This was broken up and lyophilized at a high vacuum of 1-25 microns Hg during two hours, and then ground to powder or granules. The yield was about 5 grams of lyophilized product.

EXAMPLE 2

500 g mushrooms were placed in a blender and water was added to cover the mushrooms. The blender was actuated at first at low speed, and then at a high speed during two to three minutes, until a homogeneous blend was attained. The mushroom material was separated from the water by

centrifugation in a swinging bucket centrifuge at 3000 x g for five minutes. The sediment was again placed in the blender with two volumes of isopropanol and slurried for two minutes. The slurry was put on a filter paper and vacuum filtered, and the liquid was recycled for further use. The filter cake was placed in a suitable vessel and two volumes of isopropyl or ethyl alcohol were added. The mixture was processed to form a paste and left to stand for one hour at room temperature. After filtering off the alcohol, the residue was lyophilized to form about 25-30 grams of a granular product which was ground to the desired particle size.

EXAMPLE 3

500 g of fresh orange pulp from an orange processing plant were placed in a blender with isopropyl alcohol, as described for the mushrooms above and comminuted to a homogeneous slurry. The slurry was filtered and subjected to extraction with two volumes of isopropyl alcohol to remove the remaining water and essential oils (which can be recovered from the extracting liquid in a separate recovery operation) and vacuum-filtered to obtain a cake. The cake was lyophilized to form 100 grams of a granular product.

EXAMPLE 4

Equal amounts of lyophilized unground product (25g each) prepared in accordance with Example 2 and 3, respectively were dry-ground in a blender to a powder to form 50 grams of a powdered fiber supplement.

EXAMPLE 5

Powder from each of the foregoing examples is mixed with starch or pectin and compressed into tablets in a tabletting machine. The thus obtained tablets are coated with hydrolyzed vegetable protein to make them easier to swallow. Each tablet contains about 2-5 grams of fiber.

EXAMPLE 6

The procedure of Example 2 is repeated but 0.75 g/liter of sodium hypochlorite are added to the comminution

0179295

water. Centrifugation is used not only after the first step, but also to remove the isopropanol after each extraction step. The final sediment is further dried for ten hours at 55 degrees C, and ground to granules in a mill.

EXAMPLE 7

The procedure of Example 2 is repeated but 0.5 g/liter of sodium bisulfite are added to the comminution water. After centrifugation, the sediment is again blended with water to wash the bisulfite, centrifuged, and further processed as in Example 6.

WHAT IS CLAIMED IS:

1. A dietary supplement for use as a source of indigestible, insoluble fiber comprising a solid oral dosage form comprising a fiber-containing raw material selected from the group consisting of mushroom flesh and orange pulp and combinations thereof, said raw material having been comminuted to a homogeneous slurry, extracted with a physiologically acceptable dehydrating agent, filtered or centrifuged to remove substantially all of said agent and the water contained therein, lyophilized and dry-ground to particulate or powder form, said supplement comprising an amount of said insoluble indigestible fiber sufficient to satisfy the dietary fiber requirements of a human.

2. A supplement according to claim 1 wherein said dehydrating agent is selected from the group of ethanol and propanol.

3. A supplement according to claim 1, wherein said raw material is mushroom flesh, said raw material having been bleached by adding to said material water containing 0.5-0.75 g/liter of sodium hypochlorite during said comminution.

4. A supplement according to claim 1, wherein said ground fiber is compressed in tablet form.

5. A supplement according to claim 1, wherein said solid oral dosage form comprises about 20 to about 30 grams of insoluble, indigestible fiber.

6. A method for treating chronic constipation comprising administering to a patient in need of such treatment an amount effective to treat constipation of an oral solid dosage form comprising insoluble indigestible fiber from a source selected from the group of mushrooms, orange peels and combinations thereof, said fiber having been comminuted to homogeneity, dehydrated to remove substantially all of the water contained therein by extracting with a physiologically acceptable, dehydrating agent sand filtering under reduced pressure, and lyophilized.

7. A method according to claim 6, comprising administering to said patient about 15 to about 30 grams of said fiber per day.

8. A method according to claim 6, wherein said dosage form consists of tablets.

9. A method according to claim 6, wherein said dosage form consists of powder.

10. A method according to claim 6, wherein said dosage form consists of granules.

11. A method according to claim 6, wherein said fiber comprises fiber from mushrooms, said mushroom fiber having been bleached with sodium hypochlorite.

12. A method according to claim 6, said dosage forms comprising fiber from a combination of mushrooms and orange pulp.

13. A method according to claim 6, said dosage form comprising fiber from orange pulp.

14. A method for making a composition useful as a fiber supplement and in the prevention and treatment of chronic constipation, said method comprising in sequence:

(a) providing a raw material containing insoluble, indigestible fiber selected from the group consisting of mushroom flesh, orange pulp and combinations thereof;

(b) comminuting said raw material to a homogeneous slurry;

(c) dehydrating said material by extracting it with a physiologically acceptable dehydrating agent and removing said dehydrating agent;

(d) lyophilizing said material; and

(e) grinding said lyophilized material to particulate form.

15. A method according to claim 14, wherein said raw material comprises mushroom flesh, said method further comprising bleaching said mushroom flesh during comminution with sodium hypochlorite.

16. A method according to claim 14, wherein said dehydrating agent is selected from the group consisting of

11

0179295

isopropyl alcohol and ethanol.

17.  A method according to claim 14, wherein said dehydrated material is dried by lyophilization.

18.  A method according to claim 14, said method further comprising grinding said lyophilized material to powder form.

19.  A method according to claim 17, said method further comprising said powder into tablets, said tablets consisting of a solid oral dosage form useful for the prevention and treatment of chronic constipation.

20.  A method according to claim 14, said lyophilized material comprising mushroom fiber and orange fiber.

21.  A supplement according to claim 1, wherein said mushroom flesh has been treated with an amount of sodium bifulfite sufficient to prevent formation of a brown color thereon.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 389 336 (THE QUAKER OATS CO.) <br> * claims 1-3 * | | A 23 L 1/308 <br> A 23 L 1/28 <br> A 23 L 1/29 <br> A 23 L 1/212 |
| A | DE-A-3 143 926 (A. NATTERMANN & CIE.) <br> * claims 1, 8 * | | |
| A | FR-A-1 433 571 (ETABLISSEMENTS BIGNIER SCHMID-LAURENT) <br> * claims 1, 2 * | | |
| A | FR-A- 569 438 (M.C. CALZOLARI) <br><br> * revendication * | | |
| A | JOURNAL OF FOOD SCIENCE, vol. 46, no. 2, March-April 1981, pages 650, 651, 654, Chicago, Illinois, US; R.J. BRADDOCK et al.: "Carbohydrate fiber from orange albedo" | | TECHNICAL FIELDS SEARCHED (Int. Cl.4) <br><br> A 23 L 1/00 |

The present search report has been drawn up for all claims

| Place of search | Date of completion of the search | Examiner |
|---|---|---|
| BERLIN | 23-12-1985 | SCHULTZE D |